# DEMANDE DE BREVET EUROPEEN

(11) **EP 3 088 063 A1**
(43) Date de publication de la demande: **02.11.2016**
(21) Numéro de dépôt: 16167349.6
(22) Date de dépôt: 27.04.2016
(51) Int. Cl.: A63F 13/24, A63F 13/22

(54) **BOUTON DE COMMANDE ROTATIF PERSONNALISABLE POUR UN DISPOSITIF D'ENTRÉE DE COMMANDE**

(30) Priorité: 29.04.2015 FR 1553874
(71) Demandeur: Playrapid, 13210 Saint Remy de Provence (FR)
(72) Inventeur: RUBIO, Damien, 13210 Saint Rémy de Provence (FR)
(74) Mandataire: Pontet Allano & Associes

(57) **Abrégé**

« Bouton de commande rotatif personnalisable pour un dispositif d'entrée de commande »

L'invention concerne un bouton de commande (100) pour un dispositif d'entrée de commande (400), rotatif autour d'un axe de rotation (106), caractérisé en ce qu'il comprend :
- une pièce (102), dite inférieure, prévue pour être fixée rotative, autour dudit axe de rotation (106), sur/dans un châssis dudit dispositif d'entrée de commande, et
- une pièce (104), dite supérieure, fixée de manière démontable ou amovible, sur ladite pièce inférieure (102) suivant une direction, dite d'assemblage, formant un angle inférieure ou égale à 45° avec ledit axe de rotation (106).

## Description

La présente invention concerne un bouton de commande rotatif personnalisable pour un dispositif d'entrée de commande. Elle concerne également un kit pour réaliser un tel bouton de commande, un dispositif d'entrée de commande, tel qu'une manette de jeu, comprenant un tel bouton de commande ainsi qu'un procédé pour réaliser un tel dispositif d'entrée de commande.

Le domaine de l'invention est le domaine des dispositifs d'entrée de commande pour une console de jeu ou un ordinateur, tels qu'une manette.

### Etat de la technique

La plupart des jeux électroniques/informatiques sont commandés par des dispositifs d'entrée de commande, également appelés manettes de jeu.
Chaque manette comprend au moins un bouton, également appelée gâchette, déplaçable par rotation entre une position de départ et une position d'arrivée autour d'un unique axe de rotation qui généralement est sensiblement parallèle à la face avant de la manette. Un tel bouton peut être utilisé soit pour entrer une commande binaire, soit pour entrer une commande dont l'intensité dépend de la quantité de déplacement du bouton par rapport à la position de départ. Par exemple, la vitesse de déplacement d'un objet virtuel du jeu électronique est ajustée en fonction de la course du bouton par rapport à sa position de départ.
Une manette de jeu comprend généralement deux gâchettes positionnées de chaque côté de la manette sur une partie supérieure de sorte que chaque gâchette est actionnée par un index d'une main de l'utilisateur lorsque ce dernier tient la manette entre ses mains. La plupart des jeux vidéo comportent des commandes qui doivent être entrées par l'intermédiaire des gâchettes de la manette. Ainsi, les gâchettes d'une manette font partie des boutons les plus sollicités.
Cette sollicitation fréquente aboutit à une usure rapide des gâchettes, notamment en partie supérieure. Lorsqu'il faut les changer il est alors nécessaire de démonter le châssis de la manette ce qui est une opération complexe et dangereuse pour la manette. De plus, les dimensions de la main de chaque utilisateur étant différentes, la taille de gâchettes ne conviennent pas à tous les utilisateurs.
Pour tenter de pallier au problème d'usure et de répondre au besoin de personnalisation, des solutions ont été proposées consistant en une pièce manipulation additionnelle venant se fixer sur la partie supérieure d'une gâchette suivant une direction sensiblement perpendiculaire à l'axe de rotation de la gâchette. Cependant, en plus de ne pas répondre totalement au besoin de personnalisation, ces solutions s'avèrent peu robustes car la pièce de manipulation additionnelle se démonte de manière intempestive ou se casse. De plus, la fixation de la pièce de manipulation sur la gâchette est peu pratique et présente des risques de détérioration de la gâchette.

Un but de la présente invention est de remédier aux inconvénients précités.
Un autre but de l'invention est de proposer un bouton de commande rotatif personnalisable tout en étant robuste.
Un autre but de l'invention est de proposer un bouton de commande rotatif personnalisable de manière plus pratique.
Enfin, un autre but de l'invention est de proposer un bouton de commande rotatif pouvant être personnalisé avec moins de risques de détérioration pour le bouton de commande et pour le dispositif d'entrée de commande.

### Exposé de l'invention

L'invention propose d'atteindre au moins l'un des buts précités par un bouton de commande pour un dispositif d'entrée de commande, tel qu'une manette de jeu, rotatif autour d'un axe de rotation, ledit bouton de commande étant en particulier prévu pour être actionné par un index de l'utilisateur lorsqu'il tient le dispositif d'entrée de commande entre ses mains, ledit bouton de commande étant caractérisé en ce qu'il comprend ou consiste en :
- une pièce, dite inférieure, prévue pour être fixée rotative, autour dudit axe de rotation, sur/dans un châssis dudit dispositif d'entrée de commande, et
- une pièce, dite supérieure, fixée de manière démontable ou amovible, sur ladite pièce inférieure suivant une direction, dite d'assemblage, formant un angle inférieure ou égale à 45° avec ledit axe de rotation.
Ainsi, il est possible de personnaliser à volonté le bouton de commande rotatif en personnalisant la pièce supérieure dudit bouton de commande. La pièce inférieure restant fixe, il n'est pas nécessaire de démonter le châssis du dispositif d'entrée de commande. Cette personnalisation permet de diminuer ou d'augmenter la taille totale du bouton de commande, modifier la matière de la pièce supérieure venant en contact avec le doigt de l'utilisateur, etc.
De plus, l'axe d'assemblage de la pièce supérieure avec la pièce inférieure formant un angle inférieure ou égale à 45°, il existe peu, ou pas, de risque de désassemblage intempestif : le bouton de commande ainsi obtenu est donc plus robuste.
En outre, un tel axe d'assemblage permet de fixer la pièce supérieure à la pièce inférieure de manière plus pratique car lors de la fixation de la pièce supérieure avec la pièce inférieure la rotation de celle-ci est limitée.
Enfin, le bouton de commande rotatif selon l'invention peut être personnalisé avec moins de risques de détérioration pour le bouton de commande et pour le dispositif d'entrée de commande car la fixation de la pièce supérieure avec la pièce inférieure sollicite peu ou pas, la rotation de la pièce inférieure.

En particulier, la pièce inférieure peut être prévue pour être fixée dans le châssis du dispositif d'entrée de commande de sorte qu'elle ne peut être démontée sans démontage, partiel ou total dudit châssis dudit dispositif d'entrée de commande.

Préférentiellement, la direction d'assemblage peut être parallèle à l'axe de rotation, ou du moins présenter un angle inférieur ou égal à 5°, ce qui permet d'augmenter la robustesse de l'assemblage de la pièce supérieure avec la pièce inférieure et de diminuer encore plus, les risques de désassemblage intempestif.

Avantageusement, la direction d'assemblage peut en outre ne pas être parallèle au plan de rotation du bouton de commande, qui est le même que le plan de rotation de la pièce inférieure.
Plus particulièrement, la direction d'assemblage peut présenter un angle supérieur ou égal à 45°, et en particulier un angle compris entre 85° et 95°, par rapport au plan de rotation du bouton de commande.
Préférentiellement, la direction d'assemblage peut être perpendiculaire au plan de rotation du bouton de commande.
Ainsi, les risques de désassemblage intempestif sont encore plus faibles, voire annulés.

Avantageusement, la pièce supérieure peut être fixée sur la pièce inférieure par rotation ou par translation suivant l'axe d'assemblage.
Préférentiellement, la pièce supérieure peut être fixée sur la pièce inférieure par translation suivant l'axe d'assemblage, une telle fixation étant plus simple, plus rapide et plus ergonomique à réaliser pour l'utilisateur.

Suivant un exemple de réalisation préféré, mais nullement limitatif, l'une des pièces inférieure et supérieure peut comprendre une forme de fixation mâle, en particulier solidaire de ladite pièce, prévue pour s'insérer dans une forme de fixation femelle prévue sur l'autre des pièces inférieure et supérieure, en particulier solidaire de ladite pièce.
De tels moyens de fixation permettent de réaliser une fixation manuelle robuste de la pièce supérieure sur la pièce inférieure, sans utilisation d'un outil de fixation pour le montage/démontage de la pièce supérieure sur/de la pièce inférieure, et sans manipulation d'un moyen de fixation indépendant des pièces supérieure et inférieure.
De plus, de telles formes de fixation mâles/femelles peuvent être réalisées lors de la fabrication de chacune des pièces, par exemple par moulage.
Plus particulièrement, la forme de fixation mâle et la forme de fixation femelle peuvent présenter une section en forme d'un « T », ou d'un trapèze.

Le bouton de commande selon l'invention peut en outre comprendre un moyen de verrouillage en rotation et/ou en translation de la pièce supérieure par rapport à la pièce inférieure, après que la pièce supérieure est fixée à la pièce inférieure.
Un tel moyen de verrouillage est avantageusement indépendant du moyen de fixation de la pièce supérieure sur la pièce inférieure de sorte à assurer un deuxième niveau de verrouillage, en cas de défaillance dudit moyen de fixation.
Un tel moyen de verrouillage peut comprendre un élément de verrouillage mâle prévu sur l'une des pièces, inférieure ou supérieure, venant s'insérer dans un élément de verrouillage femelle prévu sur l'autre des pièces inférieure ou supérieure, suivant une direction perpendiculaire à la direction d'assemblage de la pièce supérieure avec la pièce inférieure, lorsque la pièce supérieure est assemblée avec la pièce inférieure.

Par ailleurs, la pièce supérieure peut comporter une surface, dite de manipulation, prévue pour recevoir un appui d'un doigt d'un utilisateur pour entrer une commande de l'utilisateur.
Suivant un mode de réalisation particulier, la pièce supérieure peut comporter toute la surface de manipulation dudit bouton de commande de sorte que ledit bouton de commande peut être manipulé uniquement au travers de ladite pièce supérieure, sans aucun accès à la pièce inférieure lors de manipulation du bouton de commande.
Autrement dit, la partie supérieure peut comprendre en partie, ou constituer la totalité de, la surface de manipulation du bouton de commande par l'utilisateur, c'est-à-dire la surface prévue pour entrer en contact avec un doigt de l'utilisateur et par laquelle l'utilisateur manipule le bouton de commande.

En outre, au moins une partie de la surface d'appui peut avantageusement comporter un revêtement présentant un plus petit coefficient de dureté et/ou un plus grand coefficient de frottement de sorte à procurer une utilisation plus ergonomique pour l'utilisateur.
Un tel revêtement peut être réalisé en un plastique mou, tel que du TPU ou du TPE.

Le bouton de commande selon l'invention peut être prévu rotatif, en particulier dans un logement aménagé dans le châssis dudit dispositif d'entrée de commande, entre une position, dite de départ, lorsque ledit bouton de commande est au repos, et une position, dite d'arrivée, lorsqu'un effort est appliqué sur ledit bouton de commande en vue d'entrer une commande.
La pièce supérieure du bouton de commande peut alors comporter en outre :
- une surface, dite surface de butée de départ, prévue pour venir en butée contre une portion dudit châssis dudit dispositif lorsque ledit bouton de commande est en position départ de sorte à ajuster ladite position de départ ; et/ou
- une surface, dite surface de butée d'arrivée, prévue pour venir en butée contre une portion dudit châssis dudit dispositif lorsque ledit bouton de commande est en position d'arrivée de sorte à ajuster ladite position d'arrivée.
Dans cette forme de réalisation le bouton de commande se présente en deux parties, la partie supérieure comportant une surface de butée de départ et/ou une surface de butée d'arrivée contre le châssis du dispositif d'entrée de commande lorsque le bouton de commande est en position de départ, respectivement d'arrivée, de sorte que la position de départ, respectivement d'arrivée, du bouton de commande peut être modifiée/ajustée.
Par conséquent, selon l'invention, l'ajustement de la course du bouton de commande se fait directement par la partie supérieure du bouton de commande, et donc par le bouton de commande lui-même, et non par un élément d'ajustement externe, rapporté au bouton de commande et mobile dans ledit bouton de commande, tel que c'est le cas par exemple dans le dispositif du document US 8,480,491 B2. L'invention propose donc un ajustement de la course du bouton de commande tout en préservant l'équilibre et la robustesse du bouton de commande. De plus, l'ajustement de la course du bouton de commande selon l'invention est plus ergonomique car il ne nécessite pas la manipulation avec un outil, tel qu'un tournevis, d'un élément d'ajustement externe au bouton de commande et mobile dans le, ou par rapport au, bouton de commande.

Le bouton de commande peut comprendre la surface de butée de départ ou la surface de butée d'arrivée ou encore les deux.

Selon un mode de réalisation préféré, le bouton de commande selon l'invention peut comprendre au moins un moyen de fixation, de manière interchangeable, en une même position de fixation, au moins deux pièces supérieures.
Dans ce mode de réalisation, lesdites pièces supérieures peuvent présenter chacune une surface de butée d'arrivée se trouvant à une distance angulaire différente de la portion de châssis du dispositif d'entrée de commande contre laquelle ladite surface de butée d'arrivée vient en butée, en particulier à une distance différente du bord d'un logement aménagé dans ledit châssis et dans lequel le bouton de commande est disposé rotatif. Ainsi, les pièces supérieures sont fixées sur la pièce inférieure toujours à la même position. Par contre, les pièces supérieures comportant chacune une surface de butée d'arrivée se trouvant à une distance différente de la portion de châssis contre laquelle elles viennent en butée, chaque pièce supérieure permet une position d'arrivée différente de l'autre. Il est ainsi possible d'ajuster la position d'arrivée du bouton de commande en sélectionnant telle ou telle pièce supérieure.
Ladite distance mesurée pour la surface de butée d'arrivée peut varier d'un pas compris entre 1° et 15°, d'une pièce supérieure à une autre.
Ladite distance est mesurée lorsque le bouton de commande est en position de repos ou de départ.

Alternativement ou en plus, dans ce mode de réalisation préféré, les pièces supérieures peuvent présenter chacune une surface de butée de départ se trouvant à une distance différente de ladite même position de fixation. Ainsi, les pièces supérieures sont fixées sur la pièce inférieure toujours à la même position. Par contre, chaque pièce supérieure permet une position de départ différente en contraignant le bouton de commande à une rotation différente, dans la position de départ, par butée contre une portion de châssis se trouvant du côté de l'axe de rotation du bouton de commande et sans qu'aucun effort ne soit appliqué par l'utilisateur. Il est ainsi possible d'ajuster la position de départ du bouton de commande en sélectionnant telle ou telle pièce supérieure.
Ladite distance mesurée pour la surface de butée de départ peut varier d'un pas compris entre 1mm et 5mm, d'une pièce supérieure à une autre.

Plus particulièrement, la pièce inférieure peut comporter une unique position de fixation de la pièce supérieure sur ladite pièce inférieure.

Chaque surface de butée peut être plus ou moins large, et peut dans certains cas se limiter à un contact sous la forme d'un point. Cependant, il est préférable que la surface de contact ne se réduise pas à un point car cela provoquerait une dégradation rapide de la surface de butée et/du châssis du dispositif d'entrée de commande, notamment en ce qui concerna la surface de butée d'arrivée.

Suivant un autre mode de réalisation, qui peut éventuellement être combiné au mode de réalisation précédent, le bouton de commande peut comprendre au moins un moyen de fixation de la pièce supérieure sur ladite pièce inférieure en au moins deux positions différentes espacées dans le plan de rotation dudit bouton de commande et se trouvant à des distances différentes :
- de la portion de châssis contre laquelle la surface de butée de départ vient en butée, et/ou
- de la portion de châssis contre laquelle la surface de butée d'arrivée vient en butée.
Autrement dit, le bouton de commande peut comprendre au moins un moyen de fixation de la pièce supérieure sur ladite pièce inférieure en au moins deux positions différentes espacées dans la trajectoire de rotation de ladite pièce inférieure.
Ainsi, avec une même et unique pièce supérieure, il est possible d'ajuster la position de départ, respectivement la position d'arrivée, et donc la course, du bouton de commande.

Préférentiellement, la surface de butée de départ peut se trouver du côté d'une face avant dudit bouton de commande de sorte qu'elle vient en butée contre une portion de châssis se trouvant du côté d'un bord avant d'un logement, aménagé dans le châssis et dans lequel ledit bouton de commande est mis en rotation, et en particulier un bord dudit logement se trouvant du côté d'une face avant dudit dispositif d'entrée de commande.
En particulier, la surface de butée de départ peut se trouver du côté de l'axe de rotation de la pièce inférieure de sorte qu'elle vient en butée contre une portion de châssis se trouvant du côté dudit axe de rotation.

Préférentiellement, la surface de butée d'arrivée peut se trouver du côté d'une face latérale dudit bouton de commande de sorte qu'elle vient en butée contre une portion de châssis se trouvant du côté d'un bord latéral d'un logement dans lequel ledit bouton de commande est mis en rotation, et en particulier un bord se trouvant du côté d'une face latérale dudit dispositif d'entrée de commande.
En particulier, la surface de butée d'arrivée peut se trouver du côté d'une face latérale dudit bouton de commande, et en particulier du côté d'une face latérale de ladite pièce supérieure, qui est perpendiculaire à l'axe de rotation de la pièce inférieure de sorte qu'elle vient en butée contre une portion de châssis perpendiculaire audit axe de rotation.
Suivant un exemple de réalisation particulier, la surface de butée d'arrivée peut être prévue au niveau d'une extrémité, en regard vers la pièce inférieure, d'une forme faisant saillie de la pièce supérieure, et donc de la pièce inférieure, du côté d'une face latérale de ladite pièce supérieure, et donc de la pièce inférieure, perpendiculaire à l'axe de rotation de la pièce inférieure, et donc du bouton de commande.

Selon un autre aspect de la même invention il est proposé un kit pour réaliser un bouton de commande selon l'invention, comprenant :
- au moins une pièce inférieure, et
- au moins deux pièces supérieures pouvant être montées de manière interchangeables sur ladite pièce inférieure en une même position de fixation.

Plus particulièrement, chacune des pièces supérieures faisant partie du kit selon l'invention peuvent présenter chacune :
- une surface de butée de départ se trouvant à une distance différente de ladite même position de fixation ; et/ou
- une surface de butée d'arrivée se trouvant à une distance angulaire différente de la portion de châssis du dispositif d'entrée de commande contre laquelle ladite surface de butée d'arrivée vient en butée.
Un tel kit permet de réaliser un bouton de commande dans lequel :
- la pièce de base est fixée à un dispositif d'entrée de commande, et
- la pièce supérieure peut être changée à volonté, en particulier en vue de modifier et d'ajuster la position de départ, et/ou la position d'arrivée, et donc la course du bouton de commande.

Selon un autre aspect de la même invention, il est proposé un dispositif d'entrée de commande, tel qu'une manette de jeu, comprenant au moins un bouton de commande selon l'invention, en particulier disposé rotatif dans un logement aménagé dans le châssis, ou la coque, dudit dispositif d'entrée de commande.

En particulier, le dispositif d'entrée de commande selon l'invention peut comprendre deux faces latérales, prévue chacune pour être tenue par une main de l'utilisateur, ledit dispositif comprenant, du côté de chacune desdites faces latérales, au moins un bouton de commande selon l'invention, chacun disposé rotatif dans un logement aménagé dans le châssis dudit dispositif, et agencé pour être actionné par un index de l'utilisateur.

Selon encore un autre aspect de la même invention, il est proposé un procédé pour réaliser un dispositif d'entrée de commande selon l'invention, caractérisé en ce qu'il comprend les étapes suivantes réalisées pour au moins un bouton de commande selon l'invention :
- ouvrir au moins partiellement un châssis dudit dispositif,
- fixer la pièce inférieure libre en rotation audit dispositif, en particulier dans un logement prévu dans le châssis dudit dispositif,
- fermer ledit châssis dudit dispositif, et
- assembler la pièce supérieure sur ladite pièce inférieure.

Dans un mode de réalisation particulier, le procédé selon l'invention peut en outre comprendre une étape de sélection d'une pièce supérieure parmi au moins deux pièces supérieures, chacune desdites pièces supérieures pouvant être montée de manière interchangeable sur ladite pièce inférieure au niveau d'une même position de fixation, et présentant chacune :
- une surface de butée de départ se trouvant à une distance différente de ladite même position de fixation ; et/ou
- une surface de butée d'arrivée se trouvant à une distance angulaire différente de la portion de châssis du dispositif d'entrée de commande contre laquelle ladite surface de butée d'arrivée vient en butée.

### Description des figures et modes de réalisation

D'autres avantages et caractéristiques apparaîtront à l'examen de la description détaillée de modes de réalisation nullement limitatifs, et des dessins annexés sur lesquels :
- la FIGURE 1 est une représentation schématique d'un exemple non limitatif d'un bouton de commande selon l'invention ;
- la FIGURE 2 est une représentation schématique de la pièce inférieure du bouton de la FIGURE 1 ;
- les FIGURES 3a et 3b sont des représentations schématiques de la pièce supérieure du bouton de la FIGURE 1 suivant deux vues différentes ;
- les FIGURES 4a et 4b sont des représentations schématiques d'un exemple d'ajustement de la position d'arrivée avec un bouton de commande disposé dans le châssis d'une manette représentée de manière partielle ; et
- la FIGURE 5 est une représentation d'un exemple d'ajustement de la position de départ avec un bouton de commande disposé dans le châssis d'une manette représentée de manière partielle.
Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieur.
En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

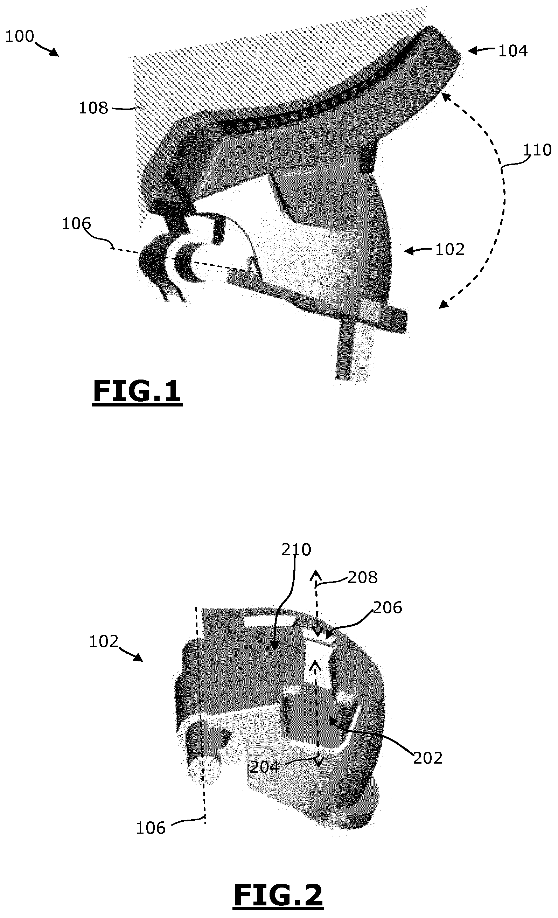

La FIGURE 1 est une représentation schématique d'un exemple de réalisation non limitatif d'un bouton de commande selon l'invention.
Le bouton de commande rotatif 100 représenté sur la FIGURE 1 comprend une pièce inférieure 102, également appelée pièce de base, et une pièce supérieure 104, également appelée pièce de manipulation, assemblées entre-elles de manière amovible.
La pièce inférieure 102 est prévue pour être fixée rotative sur un châssis d'un dispositif d'entrée de commande, également appelée « manette » dans la suite, au niveau de son axe de rotation 106. Plus particulièrement, la pièce inférieure 102 est prévue pour être fixée dans le châssis d'une manette de sorte qu'elle ne peut être montée/démontée sans démontage partielle ou totale dudit châssis.
Le bouton de commande 100 est rotatif dans un plan 108 perpendiculaire à l'axe de rotation 106, suivant une trajectoire 110 en arc de cercle ayant pour centre l'axe de rotation 106.

La FIGURE 2 est une représentation schématique de la pièce inférieure 102 du bouton de commande de la FIGURE 1.
La pièce inférieure 102 comporte une forme de fixation femelle 202, de section en forme de trapèze (ou de « T » inversé), prévue pour accueillir, suivant une direction 204 parallèle à l'axe de rotation 106 et perpendiculaire au plan de rotation 108, une forme de fixation mâle prévue sur la pièce supérieure 104, dans un sens pour fixer la pièce supérieure 104 avec la pièce inférieure 102 et dans le sens contraire pour enlever la pièce supérieure 104 de la pièce inférieure 102.
Cette forme de fixation femelle 202 permet une fixation d'une ou plusieurs pièces supérieures sur la pièce inférieure 102 en une position de fixation unique.
La pièce inférieure 102 comporte en outre une forme de verrouillage femelle 206, de section rectangulaire, prévue pour accueillir, suivant une direction 208, perpendiculaire à l'axe de rotation 106 et parallèle au plan de rotation 108, une forme verrouillage mâle prévue sur la pièce supérieure 104, lorsque la pièce supérieure est assemblée avec la pièce inférieure.
La direction 208 est sensiblement perpendiculaire à la surface supérieure 210 de la pièce inférieure 102 et la direction 204 est sensiblement parallèle à la surface supérieure 210 de la pièce inférieure 102.
Dans l'exemple représenté, la pièce inférieure 102 comporte une unique position de fixation, déterminée par la forme de fixation femelle 202, et permettant de fixer de manière amovible et interchangeable différentes pièces supérieures.

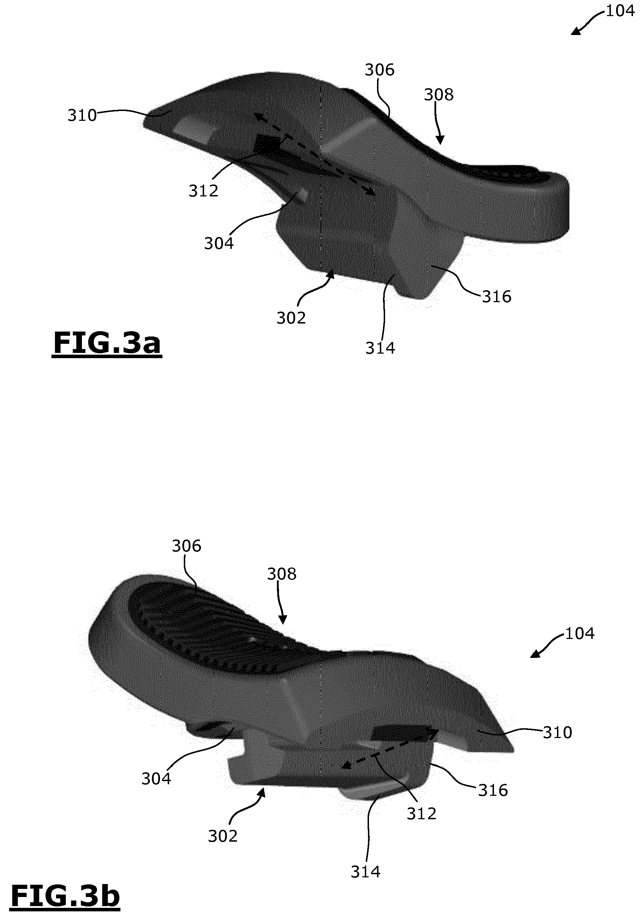

Les FIGURES 3a et 3b sont des représentations schématiques de la pièce supérieure 104 du bouton de commande 100 de la FIGURE 1 suivant deux vues différentes.
La pièce supérieure 104 comporte une forme de fixation mâle 302, de section en forme de trapèze (ou de « T » inversé), prévue pour s'insérer, suivant la direction 204 dans la forme de fixation femelle 202 prévue sur la pièce inférieure 102 pour fixer la pièce supérieure 104 à la pièce inférieure 102.
La pièce supérieure 104 comporte en outre, une forme de verrouillage mâle 304, de section rectangulaire, prévue pour s'insérer, suivant la direction 208, dans la forme de verrouillage femelle 206, prévue sur la pièce inférieure 102, lorsque la pièce supérieure 104 est assemblée avec la pièce inférieure 102. Les formes de verrouillage mâle 304 et femelle 206 coopèrent entre-elles pour maintenir la pièce supérieure 104 de manière fixe sur la pièce inférieure 102 et éviter un désassemblage intempestif de la pièce supérieure 104.
La pièce supérieure 104 comporte une surface supérieure 306 prévue pour entrer en contact avec un doigt de l'utilisateur, en particulier avec un index de l'utilisateur, lorsque l'utilisateur applique une pression sur le bouton de commande 100 pour entrer une commande. Sur cette surface supérieure 306, la pièce supérieure comporte un revêtement 308 souple présentant un plus grand coefficient de frottement. Ce revêtement 308 est réalisé en TPE.
Dans l'exemple représenté, l'utilisateur ne peut actionner le bouton de commande 100 qu'uniquement par l'intermédiaire de la surface supérieure 308 de la pièce supérieure 104.

La pièce supérieure 104 peut en outre comporter une surface de butée 310, dite surface de butée de départ, située du côté de l'axe de rotation 106 du bouton de commande lorsque la pièce supérieure 104 est assemblée avec la pièce inférieure 102. Cette surface de butée de départ 310 est prévue pour venir en contact avec une portion de châssis d'une manette, lorsque le bouton de commande 100 est fixée sur ladite manette, et lorsque le bouton de commande se trouve dans sa position de repos dans laquelle aucun effort n'est appliqué sur le bouton de commande. Plus particulièrement, la surface de butée de départ 310 est prévue pour venir en contact contre une portion de châssis se trouvant du côté d'un bord avant d'un logement, aménagé dans le châssis, dans lequel ledit bouton de commande est mis en rotation, et en particulier un bord dudit logement se trouvant du côté d'une face avant dudit dispositif d'entrée de commande et du côté de l'axe de rotation 106.
En ajustant la distance, matérialisée par la flèche 312, entre la surface de butée de départ 310 et la position de fixation de la pièce supérieure 104 sur la pièce inférieure 102, il est possible d'ajuster la position de départ du bouton de commande 100. Plus la distance 312 sera grande plus le bouton de commande 100 sera « enfoncé », ou « en rotation », dans sa position de départ, sans qu'aucun effort ne soit appliqué sur le bouton de commande 100.
Ainsi, dans l'exemple décrit, l'ajustement de la position de départ est réalisé en prévoyant plusieurs pièces supérieures 104 présentant chacune une distance 312 entre sa surface de butée de départ 310 et la position de fixation différente des autres pièces supérieures. Ainsi, l'utilisateur peut modifier/ajuster la position de départ, de manière rapide et ergonomique, en remplaçant une pièce supérieure par une autre pièce supérieure.

La pièce supérieure 104 peut en outre comporter une surface de butée 314, dite surface de butée d'arrivée, située sur un côté latéral de la pièce supérieure 104 de sorte qu'elle vient en butée contre une portion de châssis se trouvant du côté d'un bord latéral d'un logement, aménagé dans le châssis de la manette et dans lequel le bouton de commande 100 est mis en rotation, et en particulier un bord se trouvant du côté d'une face latérale de la manette.
Dans l'exemple représenté, la surface de butée d'arrivée 314 est prévue au niveau d'une extrémité, en regard vers la pièce inférieure 102, d'une forme 316 faisant saillie de la pièce supérieure 104, et de la pièce inférieure, du côté d'une face latérale de ladite pièce supérieure 104 perpendiculaire à l'axe de rotation 106 de la pièce inférieure 102.
En ajustant la distance angulaire, entre la surface de butée d'arrivée 314 et le bord du châssis contre lequel la surface de butée d'arrivée 104 vient en contact, il est possible d'ajuster la position d'arrivée du bouton de commande 100. Plus la distance angulaire 318 sera petite plus le bouton de commande 100 atteindra sa position d'arrivée rapidement, plus la course à effectuer pour atteindre la position d'arrivée sera petite.
Ainsi, dans l'exemple décrit, l'ajustement de la position d'arrivée est réalisé en prévoyant plusieurs pièces supérieures 104 présentant chacune une telle distance angulaire (entre sa surface de butée d'arrivée 314 et la portion de châssis en regard de ladite surface de butée d'arrivée 314 contre laquelle ladite surface de butée d'arrivée 314 vient en butée) différente des autres pièces supérieures. Ainsi, l'utilisateur peut modifier/ajuster la position d'arrivée, de manière rapide et ergonomique, en remplaçant une pièce supérieure par une autre pièce supérieure.

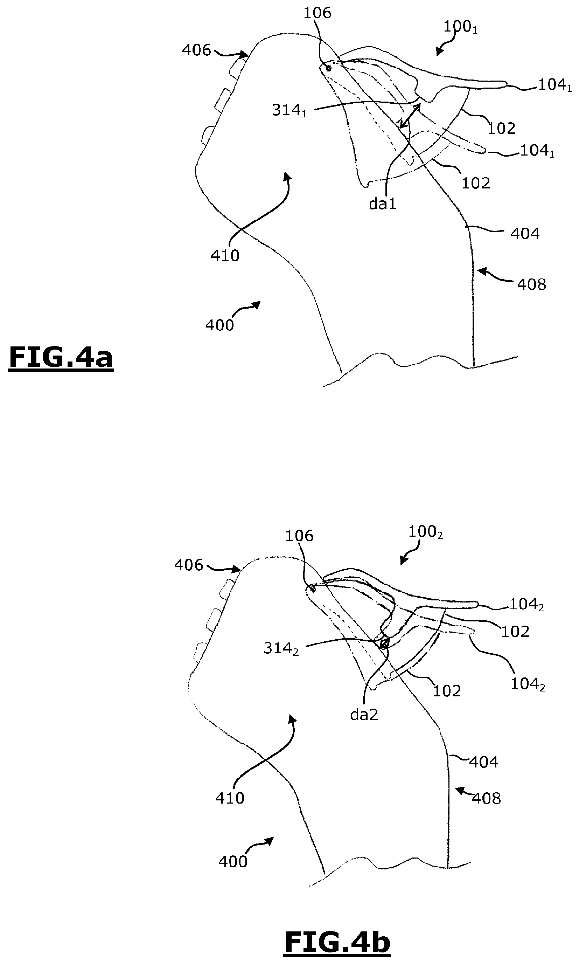

Les FIGURES 4a et 4b donnent une représentation d'un exemple d'ajustement de la position d'arrivée avec un bouton de commande disposé dans le châssis d'une manette représentée de manière partielle.
La FIGURE 4a et 4b représentent de manière incomplète une manette 400 comprenant un bouton de commande, respectivement 100₁ pour la FIGURE 4a et 100₂ pour la FIGURE 4b, monté rotative dans un logement aménagé dans le châssis 404 de la manette 400. La manette 400 comprenant une face avant 406 dirigée vers l'utilisateur lorsque la manette 400 est tenue par l'utilisateur, une face arrière 408 opposé à la face avant et une face latérale 410 rejoignant la face avant 406 et la face arrière 408.
Sur chacune des FIGURE 4a et 4b, le bouton de commande, respectivement 100₁ et 100₂, est représenté dans sa position de départ en trait plein et dans sa position d'arrivée avec un trait en pointillés.
Sur la FIGURE 4a, le bouton de commande 100₁ est formé par une pièce inférieure, par exemple la pièce inférieure 102 de la FIGURE 1. Sur la FIGURE 4a, le bouton de commande 100₁ comprend une pièce supérieure 104₁ dont la surface de butée d'arrivée 314₁ se trouve, à une distance angulaire, notée da1, de la portion de châssis contre laquelle elle vient en butée en position d'arrivée, lorsque le bouton de commande 100₂ se trouve dans sa position de départ.
Sur les FIGURE 4b, le bouton de commande 100₂ comprend la même pièce inférieure 102 que le bouton de commande 100₁ de la FIGURE 4a. A la différence de la FIGURE 4a, sur la FIGURE 4b, le bouton de commande 100₂ comprend une pièce supérieure 104₂ dont la surface de butée d'arrivée 314₂ se trouve, à une distance angulaire, notée da2, de la portion de châssis contre laquelle elle vient en butée en position d'arrivée, lorsque le bouton de commande 100₂ se trouve dans sa position de départ.
La distance angulaire da2 est plus petite que la distance angulaire da1. Par conséquent, pour le bouton de commande 100₂ la position d'arrivée du bouton est atteinte avec une rotation plus petite, c'est-à-dire avec une course plus petite, autrement dit plus rapidement, comparée au bouton de commande 100₁.

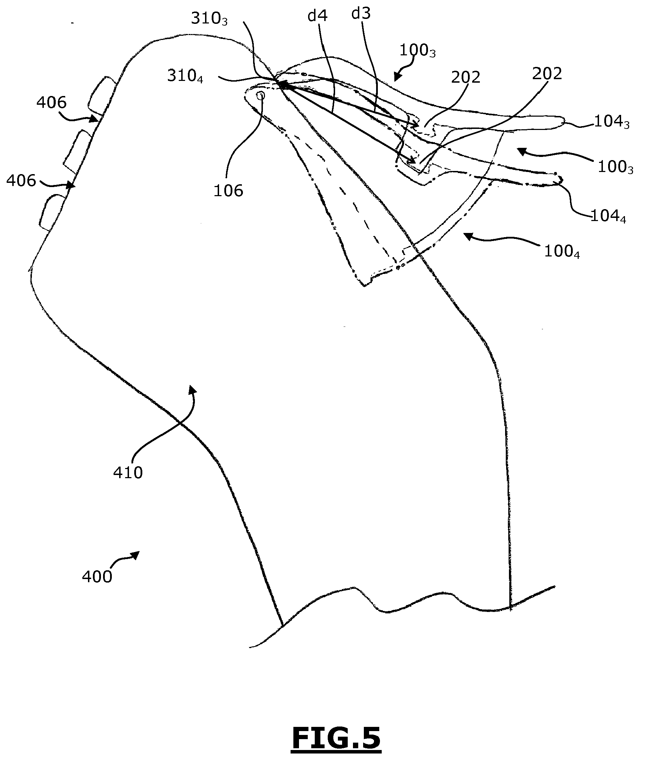

La FIGURE 5 est une représentation d'un exemple d'ajustement de la position de départ avec un bouton de commande disposé dans le châssis d'une manette représentée de manière partielle.
La FIGURE 5 représente de manière incomplète une manette 400 comprenant un bouton de commande, respectivement 100₃ et 100₄, monté rotative dans un logement aménagé dans le châssis 404 de la manette 400. La manette 400 comprenant une face avant 406 dirigée vers l'utilisateur lorsque la manette 400 est tenue par l'utilisateur, une face arrière 408 opposée à la face avant et une face latérale 410 rejoignant la face avant 406 et la face arrière 408.
Sur la FIGURE 5, les boutons de commande 100₃ et 100₄ sont représentés dans leur position de départ. Le bouton de commande 100₃ est représenté en trait plein et le bouton de commande 100₃ est représenté en pointillés.
Le bouton de commande 100₃ est formé par une pièce inférieure, par exemple la pièce inférieure 102 de la FIGURE 1. Le bouton de commande 100₃ comprend une pièce supérieure 104₃ dont la surface de butée de départ 310₃ se trouve à une distance, notée d3, par rapport à la position de fixation de la pièce supérieure 104₃ sur la pièce inférieure 102.

Le bouton de commande 100₄ comprend la même pièce inférieure 102 que le bouton de commande 100₃. A la différence du bouton de commande 100₃, le bouton de commande 100₄ comprend une pièce supérieure 104₄ dont la surface de butée départ 310₄ se trouve, à une distance, notée d4, par rapport à la position de fixation 202 de la pièce supérieure 104₄ sur la pièce inférieure 102.
La distance d3 est plus petite que la distance angulaire d4. Par conséquent, pour le bouton de commande 100₄ la position de départ est plus avancée, c'est-à-dire, présente une rotation plus grande, comparée au bouton de commande 100₃, sans qu'une pression ne soit appliquée par l'utilisateur.

Bien entendu, les exemples représentés sur les FIGURES 4a et 4b peuvent être combinés aux exemples représentés sur la FIGURE 5 de sorte qu'une même pièce supérieure réalise à la fois un ajustement de la position de départ du bouton de commande et un ajustement de la position d'arrivée du bouton de commande. Ainsi, chacune des pièces supérieures 104₃ et 104₄ peut comporter une surface de butée d'arrivée 314₁ ou 314₂.

Dans les exemples décrits, les pièces supérieures sont fixées à la pièce inférieure en une même position unique de fixation matérialisée par la forme femelle 202.
Suivant un mode de réalisation, non représenté sur les FIGURES, la ou les pièces supérieures peuvent être fixées à la pièce inférieure en au moins deux positions de fixations espacées dans le plan de rotation 108, en prévoyant :
- plusieurs moyens de fixation sur la pièce inférieure, par exemple plusieurs formes de fixation mâle ou femelle, telle que la forme de fixation femelle 202 ; et/ou
- plusieurs moyens de fixation sur la pièce supérieure, par exemple plusieurs formes de fixation mâle ou femelle, telle que la forme de fixation mâle 302.

Bien entendu l'invention n'est pas limitée aux exemples qui viennent d'être décrits.

## Revendications

1. Bouton de commande (100) pour un dispositif d'entrée de commande (400), rotatif autour d'un axe de rotation (106), **caractérisé en ce qu'**il comprend :
- une pièce (102), dite inférieure, prévue pour être fixée rotative, autour dudit axe de rotation (106), sur/dans un châssis (404) dudit dispositif d'entrée de commande (400), et
- une pièce (104), dite supérieure, fixée de manière démontable ou amovible, sur ladite pièce inférieure (102) suivant une direction (204), dite d'assemblage, formant un angle inférieure ou égale à 45° avec ledit axe de rotation (106).

2. Bouton de commande (100) selon la revendication précédente, **caractérisé en ce que** la direction d'assemblage (204) est parallèle à l'axe de rotation (106).

3. Bouton de commande (100) selon l'une quelconque des revendications précédentes, **caractérisé en ce que** la direction d'assemblage (204) n'est pas parallèle au plan de rotation (108) de la pièce inférieure (102), et en particulier est perpendiculaire audit plan de rotation (108).

4. Bouton (100) selon l'une quelconque des revendications précédentes, **caractérisé en ce que** l'une des pièces inférieure et supérieure comprend une forme de fixation mâle (302), prévue pour s'insérer dans une forme de fixation femelle (202) prévue sur l'autre des pièces inférieure et supérieure, suivant ladite direction d'assemblage (204).

5. Bouton (100) selon l'une quelconque des revendications précédentes, **caractérisé en ce qu'**il comprend un moyen de verrouillage en rotation et/ou en translation de la pièce supérieure par rapport à la pièce inférieure, après que la pièce supérieure est fixée à la pièce inférieure.

6. Bouton (100) selon l'une quelconque des revendications précédentes, **caractérisé en ce que** la pièce supérieure (104) comporte une surface (308), dite de manipulation, prévue pour recevoir un appui d'un doigt d'un utilisateur pour entrer une commande.

7. Bouton (100) l'une quelconque des revendications précédentes, **caractérisé en ce qu'**au moins une partie de la surface d'appui comporte un revêtement (306) présentant un plus petit coefficient de dureté et/ou un plus grand coefficient de frottement.

8. Bouton (100) l'une quelconque des revendications précédentes, **caractérisé en ce qu'**il est prévu rotatif entre une position, dite de départ, lorsque ledit bouton de commande est au repos, et une position, dite d'arrivée, lorsqu'un effort est appliqué sur ledit bouton de commande (100) en vue d'entrer une commande, la pièce supérieure (104) comportant :
- une surface (310), dite surface de butée départ, prévue pour venir en butée contre une portion dudit châssis (404) dudit dispositif (400) lorsque ledit bouton de commande (100) est en position de départ de sorte à ajuster ladite position de départ ; et/ou
- une surface (314), dite surface de butée d'arrivée, prévue pour venir en butée contre une portion dudit châssis (404) dudit dispositif d'entrée de commande (400) lorsque ledit bouton de commande (100) est en position d'arrivée de sorte à ajuster ladite position d'arrivée.

9. Bouton (100) selon la revendication 8, **caractérisé en ce que** la pièce inférieure (102) comprend au moins un moyen de fixation (202), de manière interchangeable, en une même position de fixation, au moins deux pièces supérieures (104₁-104₄), présentant chacune :
- une surface de butée de départ (310₃-310₄) se trouvant à une distance différente de ladite même position de fixation ; et/ou
- une surface de butée d'arrivée (314₁-314₂) se trouvant à une distance angulaire différente de la portion de châssis du dispositif d'entrée de commande (400) contre laquelle ladite surface de butée d'arrivée (314₁-314₂) vient en butée.

10. Bouton selon l'une quelconque des revendications 8 ou 9, **caractérisé en ce qu'**il comprend au moins un moyen de fixation de la pièce supérieure sur ladite pièce inférieure en au moins deux positions différentes espacées dans la plan de rotation dudit bouton de commande et se trouvant à des distances différentes :
- de la portion de châssis contre laquelle la surface de butée de départ vient en butée, et/ou
- de la portion de châssis contre laquelle la surface de butée d'arrivée vient en butée.

11. Bouton (100) selon l'une quelconque des revendications 8 à 10, **caractérisé en ce que** la surface de butée de départ (310) se trouve du côté de l'axe de rotation (106) de la pièce inférieure (102) de sorte qu'elle vient en butée contre une portion de châssis se trouvant du côté dudit axe de rotation (106).

12. Bouton (100) selon l'une quelconque des revendications 8 à 11, **caractérisé en ce que** la surface de butée d'arrivée (314) se trouve du côté d'une face latérale dudit bouton de commande de sorte qu'elle vient en butée contre une portion de châssis se trouvant du côté d'un bord latéral d'un logement dans lequel ledit bouton de commande est mis en rotation, et en particulier un bord se trouvant du côté d'une face latérale (410) dudit dispositif d'entrée de commande (400).

13. Kit pour réaliser un bouton de commande selon l'une quelconque des revendications précédentes, comprenant :
- au moins une pièce inférieure (102), et
- au moins deux pièces supérieures (104₁-104₃) pouvant être montées de manière interchangeables sur ladite pièce inférieure (102).

14. Dispositif (400) d'entrée de commande, tel qu'une manette de jeu, comprenant au moins un bouton de commande (100, 100₁-100₄) selon l'une quelconque des revendications 1 à 12.

15. Dispositif (400) selon la revendication précédente, **caractérisé en ce qu'**il comprend deux faces latérales, prévue chacune pour être tenue par une main de l'utilisateur, ledit dispositif (400) comprenant, du côté de chacune desdites faces latérales, au moins un bouton de commande (100, 100₁-100₄) selon l'une quelconque des revendications 1 à 12, agencé chacun pour être actionné par un index de l'utilisateur.

16. Procédé pour réaliser un dispositif d'entrée de commande (400) selon l'une quelconque des revendications 1 à 12, **caractérisé en ce qu'**il comprend les étapes suivantes réalisées pour au moins un bouton de commande (100, 100₁-100₄) :
- ouvrir au moins partiellement un châssis (404) dudit dispositif (400),
- fixer la pièce inférieure (102) libre en rotation audit dispositif (400),
- fermer ledit châssis (404) dudit dispositif (400),
- assembler la pièce supérieure (104₁-104₄) sur ladite pièce inférieure (102).
